Europäisches Patentamt

European Patent Office

Office européen des brevets

(11) Veröffentlichungsnummer: **0 453 836 B1**

(12) **EUROPÄISCHE PATENTSCHRIFT**

(45) Veröffentlichungstag der Patentschrift: 09.08.95

(51) Int. Cl.$^6$: **C08J 9/14**, C08J 9/18, //C08L23:16

(21) Anmeldenummer: 91105385.8

(22) Anmeldetag: 05.04.91

(54) **Schaumstoffe auf Basis eines Olefincopolymeren.**

(30) Priorität: 14.04.90 DE 4012239

(43) Veröffentlichungstag der Anmeldung:
30.10.91 Patentblatt 91/44

(45) Bekanntmachung des Hinweises auf die Patenterteilung:
09.08.95 Patentblatt 95/32

(84) Benannte Vertragsstaaten:
**BE DE FR GB IT NL**

(56) Entgegenhaltungen:
EP-A- 0 095 109
EP-A- 0 177 188
DE-A- 2 715 349
DE-A- 3 538 477
DE-A- 3 539 352

World Patents Index, latest week 8437, 3. August 1984, Derwent Publ. Ltd., London, GB & JP-A-59135234

World Patents Index, latest week 8420, 10. April 1984, Derwent Publ.Ltd., London, GB & JP-A-59062643

(73) Patentinhaber: **BASF Aktiengesellschaft**
**Carl-Bosch-Strasse 38**
**D-67063 Ludwigshafen (DE)**

(72) Erfinder: **de Grave, Isidoor, Dr.**
**Mandelring 3**
**W-6706 Wachenheim (DE)**
Erfinder: **Fischer, Joachim, Dr.**
**Frankenweg 5**
**W-6716 Dirmstein (DE)**
Erfinder: **Koegel, Wolfram**
**Eisenacher Weg 25**
**W-6800 Mannheim 31 (DE)**
Erfinder: **Tatzel, Hermann**
**Brombeerweg 3**
**W-6940 Weinheim (DE)**
Erfinder: **Graalmann, Onno, Dr.**
**Lorscher Weg 16**
**W-6915 Dossenheim (DE)**
Erfinder: **Kerth, Juergen, Dr.**
**Wattenheimer Strasse 15**
**W-6719 Carlsberg (DE)**
Erfinder: **Werner, Rainer Alexander, Dr.**
**Salinenstrasse 143**
**W-6702 Bad Duerkheim (DE)**

**Beschreibung**

Die Erfindung betrifft neuartige Schaumstoffe auf Basis eines Copolymeren aus Ethylen, Propylen und einem $C_4$- bis $C_8$-$\alpha$-Olefin.

Schaumstoffe auf Basis von Polyolefinen und Olefincopolymeren sind aufgrund ihrer Temperaturbeständigkeit und guten stoßdämpfenden Eigenschaften von großem technischen Interesse. Ihre Herstellung erfolgt in bekannter Weise durch Imprägnieren des Polymeren mit einem flüchtigen Treibmittel bei erhöhter Temperatur unter Druck und Entspannen des Gemisches. Man arbeitet entweder nach dem Extrusionsverfahren oder vorteilhaft nach dem Suspensions-Imprägnierverfahren. Bei letzterem geht man von Polymerpartikeln aus, die in wäßriger Suspension mit dem Treibmittel imprägniert und anschließend zu Schaumstoffpartikeln aufgeschäumt werden. Durch Verschweißen der Schaumstoffpartikel können Formkörper beliebiger Gestalt hergestellt werden.

Die bisher bekannten Schaumstoffe auf Basis von Olefin(co)polymeren weisen jedoch eine Reihe von Nachteilen auf. Sie zeigen entweder eine hohe Zug-, Druck- und Biegefestigkeit bei unbefriedigender Bruchdehnung oder eine hohe Bruchdehnung bei unbefriedigender Zug-, Druck- und Biegefestigkeit.

Der Erfindung lag die Aufgabe zugrunde, Schaumstoffe zu entwickeln, die sowohl eine hohe Zug-, Biege- und Druckfestigkeit als auch eine hohe Bruchdehnung aufweisen.

Es wurde nun überraschenderweise gefunden, daß Schaumstoffe auf Basis von bestimmten Copolymeren aus Ethylen, Propylen und einem $C_4$- bis $C_8$-$\alpha$-Olefin sämtliche gewünschten Eigenschaften aufweisen.

Gegenstand der Erfindung sind somit Schaumstoffpartikel der Dichte 0,01 bis 0,1 $g/cm^3$ mit einer Zellzahl von 2 bis 1000 Zellen/$mm^2$ auf Basis eines unvernetzten Copolymeren aus 0,5 bis 6 Gew.-% Ethylen, 88 bis 99 Gew.-% Propylen und 0,5 bis 6 Gew.-% eines $C_4$- bis $C_8$-$\alpha$-Olefins mit einem G-Modul von 100 bis 800 $N/mm^2$.

In der JP-A 59 062 643 ist ein vernetzter Kunststoffschaum beschrieben auf Basis eines Propylenterpolymeren mit 1 bis 10 Gew.-% Ethylen und 1 bis 10 Gew.-% eines $C_4$- bis $C_{10}$-Olefins. Der Schaumstoff wird hergestellt durch Extrusion, wobei ein endloses Schaumstoffband entsteht. Der Vernetzungsgrad soll zwischen 5 und 90 % liegen. Ist er niedriger, dann wird angeblich keine feine und gleichmäßige Zellstruktur erhalten.

Grundbestandteil der erfindungsgemäßen Schaumstoffe sind Copolymere aus 0,5 bis 6 Gew.-%, vorzugsweise 1 bis 6 Gew.-%, insbesondere 1,5 bis 6 Gew.-% Ethylen, 88 bis 99 Gew.-%, vorzugsweise 89 bis 98 Gew.-%, insbesondere 90 bis 97 Gew.-% Propylen und 0,5 bis 6 Gew.-%, vorzugsweise 1 bis 6 Gew.-%, insbesondere 1 bis 5 Gew.-% eines $C_4$- bis $C_8$-$\alpha$-Olefins, wie Buten-1, Penten-1, Hexen-1, Hepten-1 oder Octen-1. Die Copolymeren sollen einen G-Modul von 100 bis 800, vorzugsweise 100 bis 700, insbesondere 150 bis 600 $N/mm^2$ aufweisen.

Die Herstellung der Copolymeren erfolgt in bekannter Weise durch Copolymerisation der Monomeren mittels Übergangsmetallkatalysatoren. Die Copolymeren zeigen einen überwiegend statistischen Aufbau, sie sind linear aufgebaut und unvernetzt. Der Kristallitschmelzpunkt, bestimmt nach der DSC-Methode liegt im allgemeinen zwischen 110 und 155, insbesondere zwischen 115 und 150 °C. Die Schmelzwärme, bestimmt nach der DSC-Methode, liegt im allgemeinen zwischen 30 und 110 J/g, vorzugsweise zwischen 35 und 100 J/g. Vorzugsweise werden Copolymere mit einem Schmelzindex MFI (230; 2, 16) (nach DIN 53735) von 0,5 bis 15, insbesondere 1 bis 12 [g/10 min] verwendet.

Der Schaumstoff kann daneben übliche Zusatzstoffe in wirksamen Mengen enthalten, wie Farbstoffe, Pigmente, Keimbildner, Stabilisatoren, Flammschutzmittel, Synergisten, Gleitmittel und Antistatika.

Die erfindungsgemäßen Schaumstoffpartikel haben eine Dichte von 0,01 bis 0,1 $g/cm^3$, vorzugsweise 0,01 bis 0,08 $g/cm^3$, insbesondere 0,02 bis 0,08 $g/cm^3$. Sie sind überwiegend geschlossenzellig mit einer Zellzahl von 2 bis 1000, vorzugsweise 5 bis 800, insbesondere 10 bis 500 Zellen/$mm^2$.

Die Herstellung der erfindungsgemäßen Schaumstoffpartikel erfolgt in an sich bekannter Weise durch Vermischen des Copolymeren mit einem flüchtigen Treibmittel und gegebenenfalls den Zusatzstoffen und anschließendes Verschäumen. Geeignete Treibmittel sind niedrig siedende Halogenkohlenwasserstoffe und vorzugsweise aliphatische Kohlenwasserstoffe mit 3 bis 5 C-Atomen, wie Propan, n-Butan, Isobutan, n-Pentan, Isopentan und/oder Neopentan. Auch Gemische der genannten Treibmittel können verwendet werden.

Vorzugsweise erfolgt die Herstellung der erfindungsgemäßen Schaumstoffpartikel in an sich bekannter Weise nach dem Suspensions-Imprägnier-Verfahren. Das Copolymere wird dazu zweckmäßig in Form von Partikeln mit einem mittleren Durchmesser von 0,5 bis 5 mm, vorzugsweise 0,6 bis 4 mm in wäßriger Suspension mit 0,1 bis 0,4, vorzugsweise 0,15 bis 0,3 kg pro kg des Copolymeren, eines Treibmittels bei einer etwa 5 °C bis 20 °C unter dem Kristallitschmelzpunkt (DSC-Maximum) des Polymeren liegenden Temperatur unter Druck imprägniert und anschließend unter Aufschäumen entspannt.

Die erhaltenen Schaumstoffpartikel weisen im allgemeinen einen mittleren Durchmesser zwischen 1 und 20 mm und eine Schüttdichte von etwa 7 bis 55 g/l, vorzugsweise 10 bis 50 g/l auf.

Insbesondere bei niedrigen Schüttdichten diffundiert das Treibmittel häufig aus den Zellen schneller heraus als Umgebungsluft hineindiffundiert. Die Partikel können daher zum Teil auf bis zu 40 % ihres ursprünglichen Volumens schrumpfen. Sie nehmen ihre ursprüngliche Gestalt wieder an, wenn sie bei Raumtemperatur oder einer erhöhten Temperatur, maximal 20°C unterhalb des Kristallitschmelzpunktes des Copolymeren, mit Luft oder Stickstoff unter einem Überdruck von 0,5 bis 10 bar eine ausreichende Zeit, im allgemeinen 5 bis 500 Minuten, behandelt werden. Die Schaumstoffpartikel können nach bekannten Verfahren durch Erhitzen in porösen oder nicht gasdicht schließenden Formen zu beliebigen Formkörpern verschweißt werden.

Die so hergestellten Schaumstoffe haben im allgemeinen eine Zugfestigkeit von 0,1 bis 1,0 N/mm$^2$, eine Grenzbiegespannung von 0,1 bis 1,0 N/mm$^2$, eine Druckspannung bei 50 %-Stauchung von 0,05 bis 0,6 N/mm$^2$ und eine Bruchdehnung von 5 bis 50 %.

Die in den Beispielen genannten Teile sind Gewichtsteile.

Die Bestimmung der Zugfestigkeit und der Bruchdehnung erfolgte nach DIN 53571 (Verfahren II, Probekörper B), der Druckspannung bei 50 % Stauchung nach DIN 53577, der Grenzbiegespannung nach DIN 53423 und des G-Moduls nach DIN 53445. Die Bestimmung des Kristallitschmelzpunkts erfolgt durch Erhitzen einer Probemenge von 10 mg mit einer Aufheizgeschwindigkeit von 20°/min auf 200°C, Abkühlen der Probe mit einer Kühlrate von 20°/min auf Raumtemperatur und erneutes Erhitzen mit einer Heizrate von 20°/min über den Schmelzbereich hinaus. Der Kristallitschmelzpunkt entspricht der Spitze des Temperaturpeaks im DSC-Diagramm der zweiten Aufheizperiode.

Beispiel 1

In einem Druckgefäß werden 100 Teile eines Copolymeren aus 4,1 Gew.-% Ethylen, 94,5 Gew.-% Propylen und 1,4 Gew.-% Buten-1 (Meltindex 230; 2,16 = 5 g/10 min; DSC-Maximum 133°C, G-Modul 360 N/mm$^2$, mittleres Korngewicht ca. 6 mg), 24 Teile n/i-Butan (60:40), 227 Teile Wasser, 6,8 Teile Tricalciumphosphat und 0,14 Teile Natriumdodecylbenzolsulfonat als Dispergierhilfsmittel unter Rühren innerhalb von 60 Minuten auf 118°C erhitzt und anschließend, während der Druck im Kessel durch Nachpressen mit Stickstoff auf 30 bar konstant gehalten wird, durch ein Bodenventil ausgetragen und entspannt. Man erhält Schaumstoffpartikel der Schüttdichte 15 g/l mit einer Zellzahl von 10 bis 250 Zellen/mm$^2$.

Nach der Trocknung werden die Partikel 8 Stunden bei 75°C mit einem Überdruck von 3 bar Stickstoff behandelt und danach entspannt. Beim anschließenden Lagern bei Raumtemperatur ist nach etwa 1,5 Stunden ein vollständiger Druckabbau in den Zellen eingetreten. Die Schüttdichte beträgt jetzt 10 g/l.

Die Partikel werden nun druckpneumatisch in eine vorgeheizte Formkammer eingefüllt, wobei während der Befüllung ein Staudruck in der Form von 1 bar aufrechterhalten wird. Die Form wird beidseitig 12 Sekunden lang mit Dampf von 130°C beheizt. Anschließend wird entspannt, mit Wasser gekühlt, die Form geöffnet und das Formteil entnommen. Die Dichte des Formkörpers beträgt 20 g/l. Der Formkörper zeigt eine hervorragende Verschweißung, eine Zugfestigkeit von 0,22 N/mm$^2$, eine Grenzbiegespannung von 0,15 N/mm$^2$, eine Druckspannung (50 % Stauchung) von 0,14 N/mm$^2$, eine Bruchdehnung von 30 %.

Beispiel 2 bis 8

Man arbeitet wie in Beispiel 1, verwendet jedoch Copolymere der in der Tabelle angeführten Zusammensetzung, sowie unterschiedliche Mengen an Treibmitteln und Dispergierhilfsmitteln sowie unterschiedliche Imprägniertemperaturen und Imprägnierzeiten. Die Ergebnisse sind in der Tabelle zusammengefaßt.

Tabelle

| Bsp. | Comonomergehalt | | | DSC-Maximum | MFI (230;2,16) | G-Modul | Versuchsbedingungen | | |
|---|---|---|---|---|---|---|---|---|---|
| | C2 | C3 | C4/C6/C8 | | | | n/i-Butan (60:40) | Tricalcium-phosphat | Na-dodecyl-bensolsulfonat |
| | | [%] | | [°C] | [g/10 min] | [N/mm²] | [Teile] | [Teile] | [Teile] |
| 1 | 4,1 | 94,5 | 1,4 C4 | 133 | 5 | 360 | 24 | 6,8 | 0,14 |
| 2 | 1,8 | 96,1 | 2,1 C4 | 141 | 1,5 | 440 | 24 | 6,8 | 0,14 |
| 3 | 4,1 | 91,0 | 4,9 C4 | 121 | 0,7 | 190 | 24 | 6,8 | 0,14 |
| 4 | 4,1 | 94,5 | 1,4 C4 | 133 | 5 | 360 | 20 | 3,4 | 0,02 |
| 5 | 4,1 | 91,0 | 4,9 C4 | 121 | 0,7 | 190 | 20 | 3,4 | 0,02 |
| 6 | 1,8 | 96,1 | 2,1 C6 | 140 | 2,5 | 460 | 24 | 6,8 | 0,14 |
| 7 | 5,6 | 91,9 | 2,5 C4 | 121 | 5,3 | 180 | 24 | 6,8 | 0,14 |
| 8 | 4,1 | 94,5 | 1,4 C4 | 133 | 5 | 360 | 20 | 3,4 | 0,02 |
| 9 (Vgl) | 2,3 | 97,7 | | 151 | 8 | 720 | 24 | 6,8 | 0,14 |
| 10 (Vgl) | 2,3 | 97,7 | | 151 | 8 | 720 | 20 | 3,4 | 0,02 |
| 11 (Vgl) | 90,2 | | 9,8 C8 | 129 | 1,2 | 170 | 24 | 6,8 | 0,14 |
| 12 (Vgl) | 90,2 | | 9,8 C8 | 129 | 1,2 | 170 | 20 | 3,4 | 0,02 |

EP 0 453 836 B1

Tabelle Forts.

| Bsp. | Imprägnier-temperatur [°C] | Imprägnier-zeit [min] | Schütt-dichte [g/l] | Schütt-dichte nach Druckbegasung [g/l] | Formteil-dichte [g/l] | Zugfestigkeit [N/mm²] | Druckspannung (50 % Stauchung) [N/mm²] | Grenz-biege-spannung [N/mm²] | Bruch-dehnung [%] | Zellzahl Zellen/mm² |
|---|---|---|---|---|---|---|---|---|---|---|
| 1 | 118 | 60 | 15 | 10 | 20 | 0,22 | 0,14 | 0,15 | 30 | 10-250 |
| 2 | 126 | 65 | 17 | 11 | 22 | 0,26 | 0,15 | 0,23 | 25 | 10-250 |
| 3 | 106 | 53 | 16 | 10 | 20 | 0,15 | 0,12 | 0,11 | 45 | 10-250 |
| 4 | 117,5 | 60 | 33 | - | 60 | 0,73 | 0,40 | 0,68 | 20 | 15-350 |
| 5 | 105,5 | 53 | 32 | - | 55 | 0,52 | 0,31 | 0,45 | 30 | 15-350 |
| 6 | 125 | 64 | 16 | 10 | 20 | 0,25 | 0,15 | 0,23 | 30 | 10-250 |
| 7 | 106 | 53 | 17 | 12 | 22 | 0,15 | 0,12 | 0,12 | 45 | 10-250 |
| 8 | 116,3 | 58 | 48 | - | 75 | 0,85 | 0,52 | 0,9 | 18 | 50-600 |
| 9 (Vgl) | 135,8 | 65 | 16 | 12 | 22 | 0,27 | 0,17 | 0,23 | 14 | 10-300 |
| 10 (Vgl) | 135,8 | 65 | 33 | - | 55 | 0,75 | 0,50 | 0,83 | 11 | 15-500 |
| 11 (Vgl) | 116,5 | 58 | 21 | - | 35 | 0,25 | 0,14 | 0,12 | 45 | 10-400 |
| 12 (Vgl) | 115,8 | 58 | 32 | - | 50 | 0,38 | 0,22 | 0,3 | 35 | 20-600 |

**Patentansprüche**

1. Schaumstoffpartikel der Dichte 0,01 bis 0,1 g/cm$^3$ mit einer Zellzahl von 2 bis 1000 Zellen/mm$^2$ auf Basis eines unvernetzten Copolymeren aus 0,5 bis 6 Gew.-% Ethylen, 88 bis 99 Gew.-% Propylen und 0,5 bis 6 Gew.-% eines $C_4$- bis $C_8$-$\alpha$-Olefins mit einem G-Modul von 100 bis 800 N/mm$^2$.

**Claims**

1.   A foam bead having a density of from 0.01 to 0.1 g/cm$^3$ and having from 2 to 1000 cells/mm$^2$, based on an uncrosslinked copolymer comprising from 0.5 to 6% by weight of ethylene, from 88 to 99% by weight of propylene and from 0.5 to 6% by weight of a $C_4$- to $C_8$-$\alpha$-olefin having a torsion modulus of from 100 to 800 N/mm$^2$.

**Revendications**

1.   Particules alvéolaires d'une densité de 0,01 à 0,1 g/cm$^3$, d'un nombre de 2 à 1000 cellules/mm$^2$, à base d'un copolymère non réticulé, composé de 0,5 à 6 % en poids d'éthylène, 88 à 99 % en poids de propylène et 0,5 à 6 % en poids d'une $\alpha$-oléfine en C4 à C8 d'un module G de 100 à 800 N/mm$^2$.